# EUROPEAN PATENT APPLICATION

(11) **EP 4 572 249 A1**
(43) Date of publication of application: **18.06.2025**
(21) Application number: 22954274.1
(22) Date of filing: 08.08.2022
(51) Int. Cl.: H04L 27/00

(54) **COMMUNICATION METHODS AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); XU, Jing, Dongguan, Guangdong 523860 (CN); LIANG, Bin, Dongguan, Guangdong 523860 (CN); LIN, Yanan, Dongguan, Guangdong 523860 (CN)
(74) Representative: RGTH
(86) International application number: PCT/CN2022/110981
(87) International publication number: WO 2024/031294

(57) **Abstract**

Provided are communication methods and communication devices. A communication method comprises: a first device receiving one or a plurality of sensing signals, said sensing signal being a reference signal and/or a signal carried in a data channel. On the basis of the present application, a reference signal and/or a signal carried in a data channel in a wireless communication system can be multiplexed for sensing. Therefore, sensing can be implemented without defining a new signal or channel, thus reducing a standardized workload of integrated sensing and communication as well as the system complexity and the system overhead. In addition, with regard to a reference signal, the bandwidth of the reference signal can be relatively large, so that multiplexing the reference signal for sensing at least can implement sensing at relatively high precision; with regard to a signal carried in a data channel, the signal is a signal usually required to be sent during a communication process, so that multiplexing the signal in the data channel for sensing at least can reduce the overhead of the sensing.

## Description

### TECHNICAL FIELD

This application relates to the field of communications technologies, and more specifically, to a communication method and a communications device.

### BACKGROUND

An integrated sensing and communication technology may integrate wireless communication and sensing, to achieve multiple functions. For example, based on the integrated sensing and communication technology, a sensing function may be achieved by using wireless resources of wireless communication. Alternatively, sensing services on a larger scale may be achieved by using widely deployed cellular networks. Alternatively, joint sensing may be performed by using a network device and a plurality of terminal devices to achieve higher sensing accuracy. Alternatively, a sensing function may be achieved by reusing a hardware module for wireless communication, thereby reducing costs.

In a case that a communications system has a sensing capability, how to implement sensing is an urgent technical problem to be resolved.

### SUMMARY

This application provides a communication method and a communications device. Various aspects of this application are described below.

According to a first aspect, a communication method is provided, and the method includes: receiving, by a first device, one or more sensing signals, where the sensing signal is a reference signal and/or is a signal carried on a data channel.

According to a second aspect, a communication method is provided, and the method includes: sending, by a second device, one or more sensing signals, where the sensing signal is a reference signal and/or is a signal carried on a data channel.

According to a third aspect, a communication method is provided, and the method includes: receiving, by a third device, result feedback information corresponding to one or more sensing signals, where the sensing signal is a reference signal and/or is a signal carried on a data channel.

According to a fourth aspect, a communications device is provided. The communications device is a first device, and the communications device includes: a first receiving unit, configured to receive one or more sensing signals, where the sensing signal is a reference signal and/or is a signal carried on a data channel.

According to a fifth aspect, a communications device is provided. The communications device is a second device, and the communications device includes: a first sending unit, configured to send one or more sensing signals, where the sensing signal is a reference signal and/or is a signal carried on a data channel.

According to a sixth aspect, a communications device is provided. The communications device is a third device, and the communications device includes: a fourth receiving unit, configured to receive result feedback information corresponding to one or more sensing signals, where the sensing signal is a reference signal and/or is a signal carried on a data channel.

According to a seventh aspect, a communications device is provided, including a processor, a memory, and a transceiver. The memory is configured to store one or more computer programs, and the processor is configured to invoke the computer program in the memory to cause the communications device to execute some or all of the steps in the method according to the first aspect.

According to an eighth aspect, a communications device is provided, including a processor, a memory, and a transceiver. The memory is configured to store one or more computer programs, and the processor is configured to invoke the computer program in the memory to cause the communications device to execute some or all of the steps in the method according to the second aspect.

According to a ninth aspect, a communications device is provided, including a processor, a memory, and a transceiver. The memory is configured to store one or more computer programs, and the processor is configured to invoke the computer program in the memory to cause the communications device to execute some or all of the steps in the method according to the third aspect.

According to a tenth aspect, an embodiment of this application provides a communications system, and the system includes the communications device described above. In another possible design, the system may further include another device that interacts with the communications device in the solutions provided in embodiments of this application.

According to an eleventh aspect, an embodiment of this application provides a computer-readable storage medium. The computer-readable storage medium stores a computer program, and the computer program causes a terminal to execute some or all of the steps in the methods according to the foregoing aspects.

According to a twelfth aspect, an embodiment of this application provides a computer program product. The computer program product includes a non-transitory computer-readable storage medium that stores a computer program, and the computer program is operable to cause a communications device to execute some or all of the steps of the methods according to the foregoing aspects. In some implementations, the computer program product may be a software installation package.

According to a thirteenth aspect, an embodiment of this application provides a chip. The chip includes a memory and a processor, and the processor may invoke and run a computer program in the memory, to implement some or all of the steps in the methods according to the foregoing aspects.

Based on this application, a reference signal and/or a signal carried on a data channel in a wireless communications system may be reused for sensing. In this way, sensing can be implemented without defining a new signal or channel, thereby reducing standardized workload of integrated sensing and communication, and thus reducing system complexity and system overheads. In addition, a bandwidth of the reference signal may be relatively large, and therefore at least high-accuracy sensing can be implemented by reusing the reference signal for sensing. The signal carried on the data channel is a signal that usually needs to be sent in a communication process, and therefore at least sensing overheads can be reduced by reusing the signal on the data channel for sensing.

### BRIEF DESCRIPTION OF DRAWINGS

FIG. 1 shows a wireless communications system to which embodiments of this application are applied.
FIG. 2 shows schematic diagrams of eight sensing modes.
FIG. 3 is a schematic flowchart of a communication method according to an embodiment of the application.
FIG. 4 is a schematic flowchart of a communication method according to an embodiment of the application.
FIG. 5 is a schematic diagram in which result feedback information is periodic or semi-persistent according to an embodiment of this application.
FIG. 6 is a schematic structural diagram of a communications device according to an embodiment of this application.
FIG. 7 is a schematic structural diagram of a communications device according to an embodiment of this application.
FIG. 8 is a schematic structural diagram of a communications device according to an embodiment of this application.
FIG. 9 is a schematic structural diagram of an apparatus according to an embodiment of this application.

### DESCRIPTION OF EMBODIMENTS

Technical solutions in this application are described below with reference to the accompanying drawings.

### Communications network

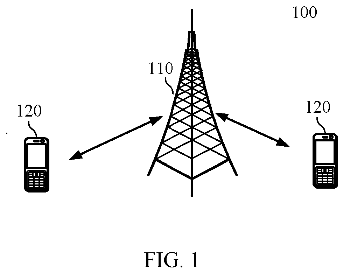

FIG. 1 shows a wireless communications system 100 to which embodiments of this application are applied. The wireless communications system 100 may include one or more communications devices, and the communications device may be, for example, a network device 110 or a terminal device 120. The network device 110 may be a device that communicates with the terminal device 120. The network device 110 may provide communication coverage for a specific geographic area, and may communicate with the terminal device 120 located within the coverage.

FIG. 1 shows one network device and two terminal devices. In some embodiments, the wireless communications system 100 may include a plurality of network devices, and another quantity of terminal devices may be included in a coverage of each network device, which is not limited in embodiments of this application.

In some embodiments, the wireless communications system 100 may further include another network entity such as a network controller or a mobility management entity, which is not limited in embodiments of this application.

It should be understood that the technical solutions in embodiments of this application may be applied to various communications systems, for example, a 5^{th} generation (5^{th} generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application may be further applied to a future communications system, for example, a sixth generation mobile communications system and a communications system of a subsequent version, or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. In some embodiments, the UE may function as a base station. For example, the UE may function as a scheduling entity, which provides sidelink signals between UEs in vehicle to everything (vehicle to everything, V2X) or device-to-device (device-to-device, D2D), or the like. For example, a cellular phone and a vehicle communicate with each other by using a sidelink signal. A cellular phone and a smart household device communicate with each other without relaying a communication signal by a base station.

The network device in embodiments of this application may be a device configured to communicate with the terminal device. The network device may include an access network device and a core network device. The access network device may also be referred to as a radio access network device. The network device in embodiments of this application may be a radio access network (radio access network, RAN) node (or device) that connects the terminal device to a wireless network. The network device may be a base station. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a receiving point (receiving point, RP), a master eNode (master eNB, MeNB), a secondary eNode (secondary eNB, SeNB), a multi-standard radio (multi-standard radio, MSR) node, a home base station, a network controller, an access node, a radio node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in D2D, V2X, and machine-to-machine (machine-to-machine, M2M) communication, a network side device in a 6G network, a device that functions as a base station in a future communications system, or the like. The base station may support networks with a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. Scenarios in which the network device and the terminal device are located are not limited in embodiments of this application.

It should be understood that all or some of functions of the communications device in this application may also be implemented by software running on hardware, or by virtualization functions instantiated on a platform (for example, a cloud platform).

### Sensing (sensing) network

In a narrow sense, the sensing network may refer to a system with capabilities such as target positioning, target imaging, target detection, target tracking, and target recognition. The target positioning may include performing one or more of the following sensing operations for a sensed target: ranging, speed measurement, or angle measurement.

In a broad sense, the sensing network may refer to a system with attributes and states of any service, network, user, terminal, and environmental object.

From the perspective of sensing application, sensing may be classified into the following categories: outdoor/wide area/local area application and indoor/local area application.

The outdoor/wide area/local area application may include one or more of the following application: smart city, smart transportation/high-speed rail, low-altitude application, or the like. The smart city may include, for example, weather monitoring. The smart transportation/high-speed rail may include, for example, one or more of high-accuracy map construction, road monitoring and management, or intrusion detection. The low-altitude application may include, for example, one or more of unmanned aerial vehicle monitoring, unmanned aerial vehicle obstacle avoidance, flight intrusion detection, or flight path management.

The indoor/local area application may include one or more of the following application: smart home, health management, smart factory, or the like. The health management may include, for example, one or more of respiratory monitoring, intrusion detection, gesture/posture recognition, motion monitoring, or moving track tracking. The smart factory may include, for example, one or more of intrusion detection, material detection, or product defect detection.

It should be noted that application of the foregoing sensing application and classification of sensing application are schematic, and an application scope of sensing is not limited thereto.

### Integrated sensing and communication

Sensing is an important application of a modern radio frequency technology. Sensing may be achieved by using a radio wave. For example, a sensing technology may use a radio wave to detect a parameter of a physical environment, to achieve environmental sensing such as target positioning, motion recognition, and imaging. Another important application of the modern radio frequency technology is wireless communication. Independent implementation of sensing and wireless communication, namely, sensing and wireless communication are separately designed, results in waste of wireless spectra and hardware resources.

With development of technologies, in some networks (for example, a 6G or beyond 5G (beyond 5G, B5G) network), communication spectra may achieve communication based on millimeter waves, terahertz waves, visible light, and the like. In other words, a spectrum for wireless communication may overlap with a sensing spectrum. A next generation network (for example, a 6G network) may be an integration of at least two of a mobile communications network, a sensing network, and a computing power network.

An integrated sensing and communication technology may integrate two functions: wireless communication and sensing. The integrated sensing and communication technology may achieve multiple functions. For example, based on the integrated sensing and communication technology, a sensing function may be achieved by using wireless resources of wireless communication. Alternatively, sensing services on a larger scale may be achieved by using widely deployed cellular networks. Alternatively, joint sensing may be performing by using a network device and a plurality of terminal devices to achieve higher sensing accuracy. Alternatively, a hardware module for wireless communication may be reused to achieve a sensing function, thereby reducing costs.

It may be understood that the integrated sensing and communication technology may cause a wireless communications system to have a sensing capability, thereby providing a foundation for development of services such as smart transportation, smart city, smart factory, and unmanned aerial vehicles.

In a sensing process, at least one of the following types of nodes may exist: a sensing node, a sensed target, or a sensing control node.

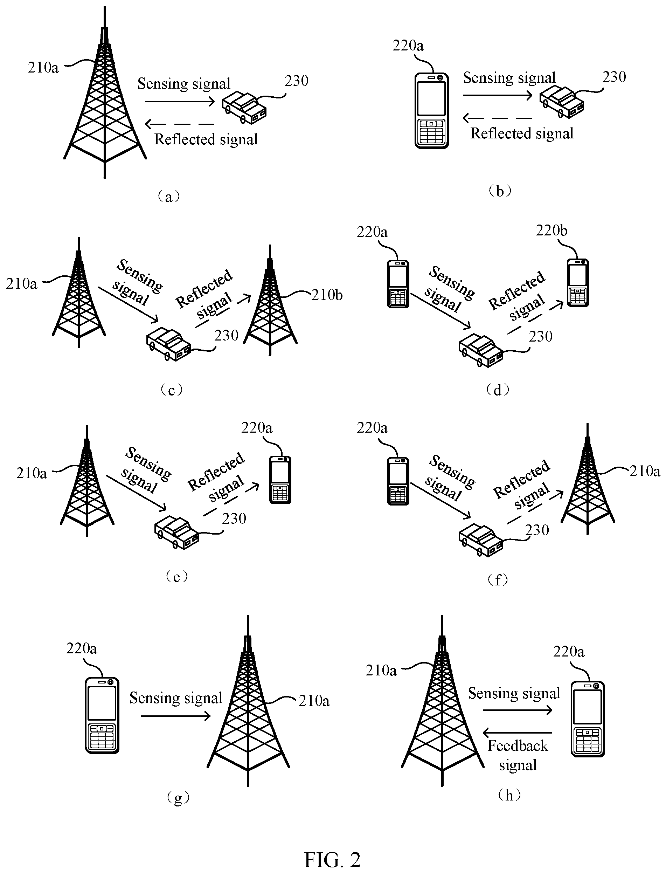

The sensing node may include a sensing signal transmit node and/or a sensing signal receive node. The sensing signal transmit node and the sensing signal receive node may be a same entity. Using eight sensing modes shown in FIG. 2 as an example, the sensing node may be a network device in mode 1 or a terminal device in mode 2. In mode 1, the sensing signal transmit node and the sensing signal receive node are a same entity, and the entity is the network device. In mode 2, the sensing signal transmit node and the sensing signal receive node are a same entity, and the entity is the terminal device.

The sensed target may be a target that needs to be sensed. In some embodiments, the sensed target may also be referred to as a sensed node or a measured target.

The sensing control node may be a node that controls and manage a sensing node and/or a sensing service. A function of the sensing control node may include but is not limited to: managing a sensing service, sending configuration information to a sensing node and/or a sensed target, configuring sending and/or receiving of a sensing measurement signal, configuring sending and/or receiving of a sensing signal, configuring a sensing node and/or a sensed target to report a measurement result and/or a sensing result, and collecting and processing a measurement result and/or a sensing result. It should be noted that the sensing control node may be the same entity as the sensed target or the sensing signal transmit node or the sensing signal receive node. Alternatively, the sensing control node may be a separate entity that is different from the sensing signal and the sensed target.

Sensing may be achieved through different modes. FIG. 2 shows schematic diagrams of eight sensing modes.

Diagram (a) in FIG. 2 is a schematic diagram of mode 1. In mode 1, a network device performs sensing through self-sending and self-receiving. As shown in diagram (a) in FIG. 2, a transmit node of a signal/channel used for sensing (referred to as a sensing signal/channel below) is a network device 210a (for example, a gNB). After the network device 210a sends a sensing signal (sensing signal), the sensing signal is reflected by a sensed target 230 (for example, a vehicle shown in diagram (a) in FIG. 2), and a reflected signal (reflected signal) returns to the network device 210a (it may also be considered that the sensing signal returns to the network device 210a). The network device 210a is not only a transmit node of a sensing signal/channel but also a receive node of a sensing signal/channel. A signal/channel described in embodiments of this application may also be referred to as a channel/signal.

Diagram (b) in FIG. 2 is a schematic diagram of mode 2. In mode 2, a terminal device performs sensing through self-sending and self-receiving. As shown in diagram (b) in FIG. 2, a transmit node of a sensing signal/channel is a terminal device 220a. After the terminal device 220a sends a sensing signal, the sensing signal is reflected by a sensed target 230 (for example, a vehicle shown in diagram (b) in FIG. 2), and a reflected signal returns to the terminal device 220a (it may also be considered that the sensing signal returns to the terminal device 220a). The terminal device 220a is not only a transmit node of a sensing signal/channel but also a receive node of a sensing signal/channel.

Diagram (c) in FIG. 2 is a schematic diagram of mode 3. In mode 3, network devices collaborate on sensing. As shown in diagram (c) in FIG. 2, a transmit node of a sensing signal/channel is a network device 210a (for example, a gNB). After the network device 210a sends a sensing signal, the sensing signal is reflected by a sensed target 230 (for example, a vehicle shown in diagram (c) in FIG. 2), and a reflected signal is transmitted to another network device 210b (it may also be considered that the sensing signal is transmitted to the another network device 210b). The network device 210b is a receive node of a sensing signal/channel.

Diagram (d) in FIG. 2 is a schematic diagram of mode 4. In mode 4, terminal devices collaborate on sensing. As shown in diagram (d) in FIG. 2, a transmit node of a sensing signal/channel is a terminal device 220a. After the terminal device 220a sends a sensing signal, the sensing signal is reflected by a sensed target 230 (for example, a vehicle shown in diagram (d) in FIG. 2), and a reflected signal is transmitted to another terminal device 220b (it may also be considered that the sensing signal is transmitted to the terminal device 220b). The terminal device 220b is a receive node of a sensing signal/channel.

Diagram (e) in FIG. 2 is a schematic diagram of mode 5. In mode 5, a network device and a terminal device collaborate on sensing. A transmit node of a sensing signal/channel is a network device 210a (for example, a gNB). After the network device 210a sends a sensing signal, the sensing signal is reflected by a sensed target 230 (for example, a vehicle shown in diagram (e) in FIG. 2), and a reflected signal is transmitted to a terminal device 220a (it may also be considered that the sensing signal is transmitted to the terminal device 220a). The terminal device 220a is a receive node of a sensing signal/channel.

Diagram (f) in FIG. 2 is a schematic diagram of mode 6. In mode 6, a terminal device and a network device collaborate on sensing. A transmit node of a sensing signal/channel is a terminal device 220a. After the terminal device 220a sends a sensing signal, the sensing signal is reflected by a sensed target 230 (for example, a vehicle shown in diagram (f) in FIG. 2), and a reflected signal is transmitted to a network device 210a (it may also be considered that the sensing signal is transmitted to the network device 210a). The network device 210a is a receive node of a sensing signal/channel.

Diagram (g) in FIG. 2 is a schematic diagram of mode 7. In mode 7, a sensed target is a transmit node of a sensing signal/channel. For example, a terminal device 220a, as a sensed target, sends a sensing signal to a network device 210a (for example, a gNB), and the network device 210a receives the sensing signal and senses the terminal device 220a.

Diagram (h) in FIG. 2 is a schematic diagram of mode 8. In mode 8, a sensed target is a receive node of a sensing signal/channel. For example, a network device 210a (for example, a gNB) sends a sensing signal, and a terminal device 220a is a receive node of a sensing signal/channel. After receiving the sensing signal, the terminal device 220a sends a feedback signal (feedback) to the network device 210a.

In a case that a communications system has a sensing capability, it has not been determined which signal or channel is used for sensing. For example, a new signal or channel may be defined specially for sensing.

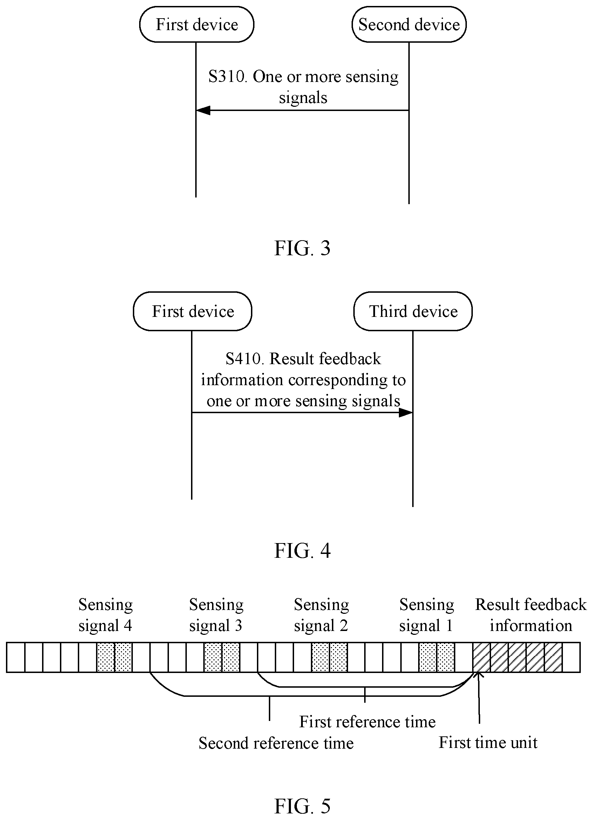

This application provides a communication method to implement a sensing function based on one or more of a data signal/channel or a reference signal/channel in a communications system. FIG. 3 shows a communication method according to an embodiment of this application. The method shown in FIG. 3 may be executed by a first device and/or a second device.

It should be noted that a device such as the first device, the second device, or a third device in this application may be any communications device described above. It may be understood that, in a case that a communications device has a sensing capability, the communications device may also be referred to as a sensing communications device. For example, the first device, the second device, or the third device may be the terminal device or the network device in the foregoing eight sensing modes.

The method shown in FIG. 3 may include step S310.

In step S310, the first device receives one or more sensing signals. The second device sends one or more sensing signals.

The sensing signal may be a reference signal and/or may be a signal carried on a data channel. In other words, in this application, a part of signals in a wireless communications system may be reused for sensing. In some cases, the sensing signal provided in this application may be an enhancement of the reference signal and/or the signal carried on the data channel, that is, the reference signal and/or the signal carried on the data channel have/has a sensing capability.

The reference signal may include an uplink reference signal, a downlink reference signal, and a sidelink reference signal.

The uplink reference signal may include but is not limited to signals such as a sounding reference signal (sounding reference symbol, SRS) and a phase tracking reference signal (phase tracking reference signal, PT-RS). In the wireless communications system, the SRS may be used for uplink channel quality measurement, uplink beam management, and the like; and the PT-RS may be used for phase tracking in a communication process.

The downlink reference signal may include but is not limited to signals such as a synchronization signal block (synchronization signal block, SSB), a channel state information-reference signal (channel state information-reference signal, CSI-RS), a PT-RS, and a positioning reference signal (positioning reference signals, PRS). In the wireless communications system, the SSB may be used by a terminal device to implement downlink synchronization with a network device; the CSI-RS may be used for time-frequency tracking, downlink beam management, downlink channel quality measurement, and the like in a communication process; and the PRS may be used for positioning.

The sidelink reference signal may include a synchronization signal block, a CSI-RS signal, and the like transmitted in a sidelink (sidelink).

In the wireless communications system, the data channel may carry communication data. The data channel may include but is not limited to one or more of a physical downlink shared channel (physical downlink shared channel, PDSCH), a physical uplink shared channel (physical uplink shared channel, PUSCH), or a physical sidelink shared channel (physical sidelink shared channel, PSSCH). The signal carried on the data channel may include one or more of a data signal or a demodulation reference signal (demodulation reference signal, DMRS) carried on the data channel. The data signal may include but is not limited to one or more of the following: an uplink data signal (for example, a signal carried on a PUSCH), a downlink data signal (for example, a signal carried on a PDSCH), or a sidelink data signal (for example, a signal carried on a PSSCH). Transmission of the data signal/channel corresponds to transmission of the DMRS signal and is used to demodulate the data channel.

The sensing signal can sense an environment around the first device and/or the second device.

It may be understood that generalized sensing may be implemented by using the sensing signal. In other words, the first device may have a generalized wireless sensing capability by using the sensing signal. In some embodiments, the environment around the first device and/or the second device may include a sensed target. The sensed target may include any object located around the first device and/or the second device. For example, the sensed target may be a communications device (for example, a terminal device), a non-communications device, an animal, or a plant. Sounding and/or sensing of a location, a shape, a distance, an angle, a moving speed, a moving track, a respiration frequency, and a special status (for example, falling) of the sensed target may be implemented by using the sensing signal. Alternatively, sounding sensing, imaging, and map construction of the surrounding environment may be implemented by using the sensing signal.

In this way, sensing can be implemented without defining a new signal or channel, thereby reducing standardized workload of integrated sensing and communication, and thus reducing system complexity and system overheads. In addition, a bandwidth of the reference signal may be relatively large, and therefore at least high-accuracy sensing can be implemented by reusing the reference signal for sensing. The signal carried on the data channel is a signal that usually needs to be sent in a communication process, and therefore at least sensing overheads can be reduced by reusing the signal on the data channel for sensing. This application does not impose limitation on an implementation of sensing. For example, sounding or sensing of the sensed target may be implemented by measuring a sensing signal and reflection of the sensing signal. In some embodiments, a signal (or referred to as an echo signal) generated from the sensing signal due to reflection of the sensed target may be received, and the sensed target is sensed based on a transmission delay of the echo signal and/or result feedback information of the sensing signal. For example, the third device may measure an azimuth of the echo signal based on the echo signal to sense an orientation of a target object.

It should be noted that the sensing described in this application is generalized sensing. For example, the sensing may include one or more of positioning, sounding, ranging, angle measurement, imaging, detection, tracking, or recognition.

It should be noted that the "sensing" described in this application may be replaced with a term related to sensing. For example, one or more of the following may be used instead of "sensing": positioning, ranging, speed measurement, angle measurement, target imaging, target detection, target tracking, or target recognition. In an implementation, the sensing signal may also be referred to as a sensing communication signal, a positioning signal, a ranging signal, or a target imaging signal.

As described above, one or more of a data signal/channel or a reference signal/channel in a communications system may be reused for sensing in this application. In other words, the sensing signal may be used for sensing or may be used for communication, or the sensing signal may be used for both sensing and communication (that is, the sensing signal is used for sensing and communication).

First information associated with the one or more sensing signals may be used to determine whether the one or more sensing signals are used for sensing and/or are used for communication. In some embodiments, the first device may receive the first information to determine, based on the first information, whether the one or more sensing signals are used for sensing and/or are used for communication. A transmit end of the first information may be a transmit end of the one or more sensing signals (for example, the second device), or may be another device.

In a case that the one or more sensing signals are used for sensing or are used for both sensing and communication, the first device (that is, a receive end of the one or more sensing signals) may feed back sensing result information. Therefore, in some embodiments, the first information may also be used to indicate whether the receive end needs to feed back the sensing result information.

The first information may be included in configuration information and/or control information corresponding to the one or more sensing signals. That is, the configuration information and/or the control information may include the first information.

In a case that the configuration information includes the first information, the first device may receive the configuration information, to obtain the first information. The configuration information may be sent by the second device, or may be sent by a device other than the first device and the second device.

In a case that the control information includes the first information, the first device may receive the control information, to obtain the first information. The control information may be sent by the second device, or may be sent by a device other than the first device and the second device.

The configuration information may be used to configure the one or more sensing signals. In some embodiments, the configuration information may be carried in a radio resource control (radio resource control, RRC) message, a system information block (system information block, SIB) message, or a medium access control (medium access control, MAC) message.

The configuration information may include one or more information elements (information element, IE). A part or all of the first information may be carried in the one or more information elements.

In some embodiments, in a case that the one or more sensing signals are used for sensing, the configuration information may include a first information element. In other words, the first information element may be used to configure the one or more sensing signals for sensing.

In some embodiments, in a case that the one or more sensing signals are used for communication, the configuration information may include a second information element. In other words, the second information element may be used to configure the one or more sensing signals for communication.

In some embodiments, in a case that the one or more sensing signals are used for sensing and communication, the configuration information may include a third information element. In other words, the third information element may be used to configure the one or more sensing signals for communication and sensing.

In some embodiments, in a case that the one or more sensing signals are used for communication and sensing, the configuration information may include a first information element and a second information element, where the first information element may carry a first part of the first information and the second information element may carry a second part of the first information. The first part of information may differ from the second part of information. The first part of information may be used to configure the one or more sensing signals for sensing, and the second part of information may be used to configure the one or more sensing signals for communication.

The following describes the first information element and the second information element by using an example in which the sensing signal is a CSI-RS. The first information element may be used to configure one or more CSI-RSs for sensing, and the second information element may be used to configure one or more CSI-RSs for communication. In other words, a CSI-RS for sensing may be configured by using the first information element, and a CSI-RS for communication may be configured by using the second information element. The CSI-RS configured by the first information element may be referred to as a CSI-RS for sensing (CSI-RS for sensing), and the CSI-RS configured by the second information element may be referred to as a CSI-RS for communication (CSI-RS for communication).

The configuration information may include one or more parameters. The one or more parameters may be included in one or more information elements. The one or more information elements may include, for example, one or more of the first information element, the second information element, or the third information element described above. The one or more parameters may include one or more of a first parameter, a second parameter, a third parameter, a fourth parameter, or a fifth parameter. The first information may be carried in one or more of the first parameter, the second parameter, the third parameter, the fourth parameter, or the fifth parameter.

In some embodiments, one or more of the first parameter, the second parameter, the third parameter, the fourth parameter, or the fifth parameter may be configured by one or more common (or jointly used or shared) information elements. For example, the one or more common information elements may include a fourth information element. The fourth information element may include one or more of the first parameter, the second parameter, the third parameter, the fourth parameter, or the fifth parameter. Alternatively, a plurality of common information elements may include a fifth information element and a sixth information element. The fifth information element may include one or more of the first parameter, the second parameter, the third parameter, the fourth parameter, or the fifth parameter. The sixth information element may include one or more of the first parameter, the second parameter, the third parameter, the fourth parameter, or the fifth parameter. The parameter included in the sixth information element may be different from the parameter included in the fifth information element.

In some embodiments, the configuration information may include the first parameter and/or the second parameter. The first parameter may be used to indicate a part or all of the first information, and the second parameter may be used to indicate a part or all of the first information.

In some implementations, in a case that the one or more sensing signals are used for sensing, the configuration information may include the first parameter. In other words, if the first parameter is configured, it may indicate that the one or more sensing signals are used for sensing.

In some implementations, in a case that the one or more sensing signals are used for communication, the configuration information may include the second parameter. In other words, if the second parameter is configured, it may indicate that the one or more sensing signals are used for communication.

In some implementations, in a case that the one or more sensing signals are used for communication and sensing, the configuration information may include the first parameter and the second parameter. In other words, if the first parameter and the second parameter are configured, it may indicate that the one or more sensing signals are used for communication and sensing.

In some implementations, in a case that the one or more sensing signals are used for communication, the configuration information may not include the first parameter.

In some implementations, the configuration information may include the fourth parameter. The fourth parameter may be a parameter different from the first parameter, and the fourth parameter may be used to indicate that the one or more sensing signals are used for sensing. It may be understood that, in a case that the configuration information includes the second parameter and the fourth parameter, the one or more sensing signals may be used for both communication and sensing.

In some implementations, in a case that the one or more sensing signals are used for sensing, the configuration information may not include the second parameter.

In some implementations, the configuration information may include the fifth parameter. The fifth parameter may be a parameter different from the second parameter, and the fifth parameter may be used to indicate that the one or more sensing signals are used for communication. It may be understood that, in a case that the configuration information includes the first parameter and the fifth parameter, the one or more sensing signals may be used for both communication and sensing.

In some embodiments, the configuration information may include the third parameter, and the third parameter may be used to indicate the first information. In a case that the one or more sensing signals are used for sensing, a value of the third parameter may include a first value or not include a second value. In other words, when the value of the third parameter in the configuration information corresponding to the one or more sensing signals used for sensing includes the first value, the one or more sensing signals may be used for sensing. In a case that the one or more sensing signals are used for communication, a value of the third parameter may include a second value or not include a first value. In other words, when the value of the third parameter in the configuration information corresponding to the one or more sensing signals used for sensing includes the second value, the one or more sensing signals may be used for communication.

In an implementation, in a case that the one or more sensing signals are used for communication and sensing, a value of the third parameter may include a third value. The third value may be a value different from the first value and/or the second value. In other words, when the value of the third parameter in the configuration information corresponding to the one or more sensing signals used for sensing includes the third value, the one or more sensing signals may be used for communication and sensing.

The foregoing describes in detail the technical solution in which the first information is included in the configuration information. The following describes the technical solution in which the first information is included in the control information. It may be understood that the first information may be included only in the configuration information, the first information may be included only in the control information, or the first information may be included in the configuration information and the control information. In other words, the foregoing technical solution in which the first information is included in the configuration information and the technical solution in which the first information is included in the control information may be separately implemented, or may be implemented in combination.

It should be noted that the first information being included in the configuration information and/or the control information may include that the first information is the configuration information and/or the control information. The control information may be used to trigger sending of the one or more sensing signals. In other words, the sending of the one or more sensing signals may be controlled by control information corresponding to one or more sensing control signals. For example, the control information may include downlink control information (downlink control information, DCI).

The first information may be carried in a first indicator field of the control information. In other words, the control information may indicate, by using the first indicator field, that the corresponding one or more sensing signals are used for sensing, or used for communication, or used for both sensing and communication.

In a case that the one or more sensing signals are used for sensing or are used for both sensing and communication, the first device (that is, a receive end of the one or more sensing signals) may feed back sensing result information. Therefore, in some embodiments, the first indicator field may also be used to indicate whether the receive end needs to feed back the sensing result information.

In some implementations, when a value of the first indicator field includes a fourth value, the one or more sensing signals may be used for sensing; or when a value of the first indicator field includes a fifth value, the one or more sensing signals may be used for communication; or when a value of the first indicator field includes a sixth value, the one or more sensing signals may be used for communication and sensing.

It may be understood that the first information may be included only in the configuration information or the control information, or may be included in both the configuration information and the control information. In other words, the first information may be determined by using the configuration information; or the first information may be determined by using the control information; or the first information may be determined by using both the configuration information and the control information. For example, a third part of the first information may be included in the configuration information, and a fourth part of the first information may be included in the control information. The first device may obtain the first information with reference to the third part of information and the fourth part of information. In other words, the third part of information and the fourth part of information may form all of the first information.

The sensing signal is described above, and feedback of the sensing signal is described below. The feedback of the sensing signal may be indicated by result feedback information. In a case that the sensing signal is used for sensing, the result feedback information may be used to indicate sensing result feedback information. In other words, the result feedback information may include the sensing result feedback information, and is used to indicate a feedback result for the sensing signal. In a case that the sensing signal is used for communication, the result feedback information may be used to indicate communication feedback information. In some embodiments, in a case that the sensing signal is the reference signal, the communication feedback information may include communication measurement feedback information (for example, a channel measurement results); or in a case that the sensing signal is the signal carried on the data channel, the communication feedback information may include hybrid automatic repeat request (hybrid automatic repeat request, HARQ) feedback information.

It should be noted that the result feedback information may correspond to the one or more sensing signals. In other words, one piece of result feedback information may include feedback information of one sensing signal, or may include feedback information of a plurality of sensing signals. In some embodiments, a plurality of pieces of sensing result feedback information may correspond to a plurality of sensing signals. For example, the plurality of pieces of sensing result feedback information may be in a one-to-one correspondence with the plurality of sensing signals.

FIG. 4 is a schematic flowchart of a communication method according to an embodiment of the application. The method shown in FIG. 4 may be executed by a first device and/or a third device. The third device may be any communications device or sensing communications device described above. The third device may be a device that is the same as or different from a second device. The third device may be a receive end of a reflected signal of a sensing signal. The third device may be an entity in which a sensing node and/or a sensing control node are/is located.

The method shown in FIG. 4 may include step S410. In step S410, the first device may send sensing result feedback information corresponding to one or more sensing signals. Correspondingly, the third device may receive the sensing result feedback information corresponding to the one or more sensing signals.

It should be noted that the methods shown in FIG. 3 and FIG. 4 may be separately implemented, or may be implemented in combination.

The following separately describes feedback of a sensing signal by assuming that the sensing signal is a reference signal and/or is a signal carried on a data channel. Case 1 describes a case that the sensing signal is the reference signal, and case 2 describes a case that the sensing signal is the signal carried on the data channel. It may be understood that the following embodiments in case 1 and case 2 may be implemented in combination. In other words, in the cases that the sensing signal is the reference signal and the signal carried on the data channel, the embodiments in case 1 and case 2 may be implemented in combination.

### Case 1: The sensing signal is the reference signal

In a case that the sensing signal is the reference signal, result feedback information may be periodic, semi-persistent, or aperiodic. The following separately describes the result feedback information of different types. (1) Result feedback information corresponding to the one or more sensing signals is periodic or semi-persistent.

In a case that the result feedback information is periodic, the result feedback information is unnecessary to be triggered, and a receive device (that is, the first device) of the sensing signal may periodically feed back a communication result and/or a sensing result. In a case that the result feedback information is semi-persistent, the result feedback information needs to be triggered; and after the triggering, a receive device (that is, the first device) of the sensing signal may periodically feed back a communication result and/or a sensing result.

The result feedback information may be obtained based on a sensing signal in a time unit no later than (earlier than or equal to) a first time unit. The first time unit may be determined based on a time unit occupied by the result feedback information. In some implementations, the first time unit may be one of one or more time units occupied by the result feedback information. For example, the first time unit may be a first-ranked time unit or a last time unit occupied by the result feedback information. In some implementations, the first time unit may be another time unit mapped by a time unit occupied by the result feedback information. In other words, the first time unit may be determined based on the time unit occupied by the result feedback information.

FIG. 5 is a schematic diagram in which result feedback information is periodic or semi-persistent according to an embodiment of this application. As shown in FIG. 5, the first-ranked time unit occupied by the result feedback information may be the first time unit.

In some embodiments, in a case that the result feedback information is used to indicate communication measurement feedback information, the result feedback information may be obtained based on a first sensing signal. The first sensing signal may be a sensing signal transmitted in a time unit no later than a first reference time before the first time unit. It may be understood that the first sensing signal may be a sensing signal sent or received in a time unit earlier than or equal to the first reference time before the first time unit. For example, the first reference time may be N time units, and the first sensing signal may be a sensing signal transmitted in the N^{th} time unit before the first time unit, or the first sensing signal may be a sensing signal transmitted in a time unit before the N^{th} time unit before the first time unit. N may be an integer greater than 0. For example, the first reference time may be indicated by 12 symbols shown in FIG. 5, and the first sensing signal may be a sensing signal transmitted in a time unit earlier than or equal to the 12 symbols before the first time unit, that is, a sensing signal 3.

In some embodiments, in a case that the result feedback information is used to indicate sensing result feedback information, the result feedback information may be obtained based on a second sensing signal. The second sensing signal may be a sensing signal sent or received in a time unit no later than a second reference time before the first time unit. It may be understood that the second sensing signal may be a sensing signal transmitted in a time unit earlier than or equal to the second reference time before the first time unit. For example, the second reference time may be M time units, and the second sensing signal may be a sensing signal transmitted in the M^{th} time unit before the first time unit, or the second sensing signal may be a sensing signal transmitted in a time unit before the M^{th} time unit before the first time unit. M may be an integer greater than 0. For example, the second reference time may be indicated 18 symbols shown in FIG. 5, and the second sensing signal may be a sensing signal transmitted in a time unit earlier than or equal to the 18 symbols before the first time unit, that is, a sensing signal 4.

It may be understood that, in a case that the result feedback information is used to indicate both the sensing result feedback information and the communication measurement feedback information, the result feedback information may be obtained based on the first sensing signal and the second sensing signal by using the foregoing method.

In some embodiments, in a case that the result feedback information is used to indicate sensing result feedback information and communication measurement feedback information, the result feedback information may be obtained based on a third sensing signal. The third sensing signal may be a sensing signal sent or received in a time unit no later than a third reference time before the first time unit, and the third reference time is obtained based on the first reference time and the second reference time. In some embodiments, the third reference time may be a maximum time in the first reference time and the second reference time. For example, the first reference time may be indicated by 12 symbols shown in FIG. 5, the second reference time may be indicated by 18 symbols shown in FIG. 5, and the third reference time may be the larger one of the first reference time and the second reference time, indicated by 18 symbols. That is, the third sensing signal may be a sensing signal transmitted in a time unit earlier than or equal to the 18 symbols before the first time unit, that is, a sensing signal 4.

(2) Result feedback information corresponding to the one or more sensing signals is aperiodic.

In a case that the result feedback information is aperiodic, sending of the result feedback information needs to be triggered, for example, may be triggered by using control information. After the result feedback information is triggered, a receive device (that is, the first device) of the sensing signal may feed back a communication result and/or a sensing result.

A time unit in which the result feedback information corresponding to the one or more sensing signals is located may be determined based on a second time unit. The second time unit may be determined based on a time unit in which the one or more sensing signals are located, or the second time unit may be determined based on a time unit in which the control information corresponding to the one or more sensing signals is located.

In some embodiments, the second time unit may be a first-ranked time unit or a last time unit in one or more time units occupied by the one or more sensing signals. Alternatively, the second time unit may be a first-ranked time unit or a last time unit in one or more time units in which the control information corresponding to the one or more sensing signals is located.

In some embodiments, the first-ranked time unit or the last time unit in the one or more time units occupied by the one or more sensing signals may be mapped to another time unit, and the second time unit may be the another time unit. In other words, the second time unit may be determined based on the first-ranked time unit or the last time unit in the one or more time units occupied by the one or more sensing signals. Alternatively, the first-ranked time unit or the last time unit in the one or more time units in which the control information corresponding to the one or more sensing signals is located may be mapped to another time unit, and the second time unit may be the another time unit. In other words, the second time unit may be determined based on the first-ranked time unit or the last time unit in the one or more time units occupied by the control information corresponding to the one or more sensing signals.

In some embodiments, in a case that the result feedback information is used to indicate sensing result feedback information, the sensing result feedback information indicated by the result feedback information is valid if a time unit in which the result feedback information is located (for example, the first-ranked time unit and/or the last time unit in one or more time units in which the result feedback information is located) is not earlier than a first processing time after the second time unit. It may be understood that if the time unit in which the result feedback information is located is later than or equal to the first processing time after the second time unit, a receive node (for example, the first device) of the one or more sensing signals may report the valid sensing result feedback information. If the time unit in which the result feedback information is located is earlier than the first processing time after the second time unit, the receive node of the one or more sensing signals may report the invalid sensing result feedback information or not report the sensing result feedback information, depending on implementation of the first device.

It should be noted that the first processing time may correspond to or include a duration (which may be referred to as first processing duration). In some embodiments, the first processing time may occupy one or more time units.

In some embodiments, in a case that the result feedback information is used to indicate communication measurement feedback information, the communication measurement feedback information indicated by the result feedback information is valid if the time unit in which the result feedback information is located is not earlier than a second processing time after the second time unit. It may be understood that if the time unit in which the communication measurement feedback information is located is later than or equal to the second processing time after the second time unit, the receive node (for example, the first device) of the one or more sensing signals may report the valid communication measurement feedback information. If the time unit in which the communication measurement feedback information is located is earlier than the second processing time after the second time unit, the receive node of the one or more sensing signals may report the invalid communication measurement feedback information or not report the communication measurement feedback information, depending on implementation of the first device.

It should be noted that the second processing time may correspond to or include a duration (which may be referred to as second processing duration). In some embodiments, the second processing time may occupy one or more time units.

In some embodiments, the second processing time may be determined based on the first processing time; or the first processing time may be determined based on the second processing time; or the first processing time and the second processing time may be separately determined, that is, the first processing time is independent from the second processing time.

It may be understood that, in a case that the result feedback information includes the sensing result feedback information and the communication measurement feedback information, it may be separately determined whether the communication measurement feedback information and the sensing result feedback information is valid by using the foregoing method.

In some embodiments, in a case that the result feedback information is used to indicate the sensing result feedback information and the communication measurement feedback information, both the communication measurement feedback information and the sensing result feedback information indicated by the result feedback information is valid if the time unit in which the result feedback information is located is not earlier than (later than or equal to) a third processing time after the second time unit. The third processing time may be determined based on the first processing time and the second processing time. In some embodiments, the third processing time may be a maximum time in the first processing time and the second processing time. It may be understood that if the sensing result feedback information and the communication measurement feedback information are transmitted in a same time unit and the time unit in which the result feedback information is located is later than or equal to the third processing time after the second time unit, the receive node of the one or more sensing signals may report the valid communication measurement feedback information and sensing result feedback information. If the time unit in which the result feedback information is located is earlier than the third processing time after the second time unit, the receive node of the one or more sensing signals may report the invalid communication measurement feedback information and sensing result feedback information, or the receive node may not report the communication measurement feedback information and/or the sensing result feedback information, depending on implementation of the first device.

It should be noted that the third processing time may correspond to or include a duration (which may be referred to as a third processing duration). In some embodiments, the third processing time may occupy one or more time units.

It should be noted that one or more of the duration or the occupied time unit of the first processing time, the duration or the occupied time unit of the second processing time, or the duration or the occupied time unit of the third processing time may be predefined, preset, or configured. For example, the duration of the first processing time and/or the duration of the second processing time may be specified in a protocol or configured by a sensing control node.

It should be noted that in case 1, the time unit in which the communication measurement feedback information corresponding to the one or more sensing signals is located may be the same as or different from the time unit in which the sensing result feedback information corresponding to the one or more sensing signals is located.

### Case 2: The sensing signal is the signal carried on the data channel

Result feedback information corresponding to the one or more sensing signals may include sensing result feedback information and/or HARQ feedback information. A time unit in which the sensing result feedback information and/or the HARQ feedback information is located may be determined based on a second time unit. The second time unit may be determined based on a time unit in which the one or more sensing signals are located, or the second time unit may be determined based on a time unit in which control information corresponding to the one or more sensing signals is located. In some embodiments, the second time unit may be a first-ranked time unit or a last time unit occupied by the one or more sensing signals. In some embodiments, the second time unit may be the a first-ranked time unit or a last time unit in which the control information corresponding to the one or more sensing signals is located.

In some embodiments, the first-ranked time unit or the last time unit in the one or more time units occupied by the one or more sensing signals may be mapped to another time unit, and the second time unit may be the another time unit. In other words, the second time unit may be determined based on the first-ranked time unit or the last time unit in the one or more time units occupied by the one or more sensing signals. Alternatively, the first-ranked time unit or the last time unit in the one or more time units in which the control information corresponding to the one or more sensing signals is located may be mapped to another time unit, and the second time unit may be the another time unit. In other words, the second time unit may be determined based on the first-ranked time unit or the last time unit in the one or more time units occupied by the control information corresponding to the one or more sensing signals.

In some embodiments, if a time unit in which the sensing result feedback information corresponding to the one or more sensing signals is located is not earlier than a fourth processing time after the second time unit, the sensing result feedback information corresponding to the one or more sensing signals is valid. It may be understood that if the time unit in which the result feedback information is located is later than or equal to the fourth processing time after the second time unit, a receive node of the one or more sensing signals may report the valid sensing result feedback information. If the time unit in which the result feedback information is located is earlier than the fourth processing time after the second time unit, the receive node of the one or more sensing signals may report the invalid sensing result feedback information or not report the sensing result feedback information, depending on implementation of the first device.

It should be noted that the fourth processing time may correspond to or include a duration (which may be referred to as a fourth processing duration). In some embodiments, the fourth processing time may occupy one or more time units.

In some embodiments, if a time unit in which the HARQ feedback information corresponding to the one or more sensing signals is located is not earlier than a fifth processing time after the second time unit, the HARQ feedback information corresponding to the one or more sensing signals is valid. It may be understood that if the time unit in which the HARQ feedback information is located is later than or equal to the fifth processing time after the second time unit, the receive node of the one or more sensing signals may report the valid communication measurement feedback information. If the time unit in which the HARQ feedback information is located is earlier than the fifth processing time after the second time unit, the receive node of the one or more sensing signals may report the invalid communication measurement feedback information or not report the communication measurement feedback information, depending on implementation of the first device.

It should be noted that the fifth processing time may correspond to or include a duration (which may be referred to as a fifth processing duration). In some embodiments, the fifth processing time may occupy one or more time units.

In some embodiments, the fifth processing time may be determined based on the fourth processing time; or the fourth processing time may be determined based on the fifth processing time; or the fourth processing time and the fifth processing time may be separately determined, that is, the fourth processing time is independent from the fifth processing time.

It may be understood that, in a case that the result feedback information includes both the sensing result feedback information and the HARQ feedback information, it may be separately determined whether the HARQ feedback information and the sensing result feedback information is valid by using the foregoing method.

In some embodiments, if the HARQ feedback information corresponding to the one or more sensing signals and the sensing result feedback information corresponding to the sensing signal is transmitted in a same time unit, and the same time unit is not earlier than a sixth processing time after the second time unit, the HARQ feedback information and the sensing result feedback information corresponding to the one or more sensing signals is valid. The sixth processing time may be determined based on the fourth processing time and the fifth processing time. For example, the sixth processing time may be a maximum time in the fourth processing time and the fifth processing time. It may be understood that, in a case that the sensing result feedback information and the HARQ feedback information is transmitted in a same time unit, the receive node of the one or more sensing signals may report the valid HARQ feedback information and sensing result feedback information if the time unit in which the HARQ feedback information and the sensing result feedback information is located is later than or equal to the sixth processing time after the second time unit. If the time unit in which the HARQ feedback information and the sensing result feedback information is located is earlier than the sixth processing time after the second time unit, the receive node of the one or more sensing signals may report the invalid HARQ feedback information and sensing result feedback information, or the receive node may not report the HARQ feedback information and/or the sensing result feedback information, depending on implementation of the first device.

It should be noted that the sixth processing time may correspond to a duration. In some embodiments, the sixth processing time may occupy one or more time units.

It should be noted that one or more of the duration or the occupied time unit of the fourth processing time, the duration or the occupied time unit of the fifth processing time, or the duration or the occupied time unit of the sixth processing time may be predefined, preset, or configured. For example, the duration of the fourth processing time and/or the duration of the fifth processing time may be specified in a protocol or configured by a sensing control node.

The time unit in which the HARQ feedback information corresponding to the one or more sensing signals is located may be the same as or different from the time unit in which the sensing result feedback information corresponding to the one or more sensing signals is located.

In an embodiment, the time unit in which the HARQ feedback information corresponding to the one or more sensing signals is located is not later than the time unit in which the sensing result feedback information corresponding to the one or more sensing signals is located. It may be understood that the first device may obtain the HARQ feedback information before or when receiving the sensing result feedback information, so that a situation of a channel (for example, channel quality) for transmitting the one or more sensing signals can be determined based on the HARQ feedback information. For example, in a case that the HARQ feedback information is a NACK, the channel quality is relatively poor; or in a case that the HARQ feedback information is an ACK, the channel quality is relatively good. The first device may further determine, based on the situation of the channel, whether the sensing result feedback information is valid or determine whether to transmit (including send and/or receive) the sensing result feedback information.

The following describes in detail processing of the sensing result feedback information for different HARQ feedback information.

In some embodiments, in a case that the HARQ feedback information is an ACK, the first device may send the sensing result feedback information corresponding to the one or more sensing signals, and the third device may receive the sensing result feedback information corresponding to the one or more sensing signals. In other words, the first device may send the sensing result feedback information, and the third device may receive the sensing result feedback information, only in a case that the one or more sensing signals used for communication are demodulated correctly. It may be understood that, in a case that the HARQ feedback information is an ACK, quality of a channel for transmitting the one or more sensing signals is relatively good. In a case that the quality of the channel is relatively good, a sensing result with relatively high accuracy can be obtained. In this case, more accurate sensing can be implemented by transmitting the sensing feedback information.

In some embodiments, in a case that the HARQ feedback information is a NACK, the first device may not send the sensing result feedback information corresponding to the one or more sensing signals, and the third device may not receive the sensing result feedback information corresponding to the one or more sensing signals.

In some embodiments, in a case that the HARQ feedback information is a NACK, the first device may send the sensing result feedback information, and the third device may receive the sensing result feedback information, where a bit corresponding to the sensing result feedback information is a preset value. The preset value may be preconfigured, or may be predefined in a protocol. The preset value may be used to occupy a bit, that is, the bit corresponding to the sensing result feedback information is one or more placeholders. In other words, if the bit corresponding to the sensing result feedback information is the preset value, a sensing result transmitted in the sensing result feedback information is not real. A receive end of the sensing result feedback information may ignore the sensing result feedback information.

It is assumed that the HARQ feedback information and the sensing result feedback information occupy different time units. In a case that the HARQ feedback information is an ACK, the first device may transmit the HARQ feedback information in a fourth time unit, and transmit the sensing result feedback information corresponding to the one or more sensing signals in a fifth time unit that is later than the fourth time unit. In a case that the HARQ feedback information is a NACK, the first device may transmit the HARQ feedback information in the fourth time unit, and does not transmit the sensing result feedback information corresponding to the one or more sensing signals in the fifth time unit that is later than the fourth time unit; or the first device may transmit the sensing result feedback information in the fifth time unit, where a bit corresponding to the sensing result feedback information is a preset value.

The following description is made by using an example in which the HARQ feedback information and the sensing result feedback information occupy a same time unit.

In a case that the HARQ feedback information and the sensing result feedback information occupy a same time unit, the HARQ feedback information and the sensing result feedback information may be coded in separate coding manners or a common coding manner. In the case of separate coding, the HARQ feedback information and the sensing result feedback information may be coded by using separate (separate) bit rates and/or by separately adding cyclic redundancy check (cyclic redundancy check, CRC), thereby separately outputting rate matching output sequences. In the case of common coding, the HARQ feedback information and the sensing result feedback information may form a bit sequence by using a same bit rate, or CRC may be added to the bit sequence to output a rate matching output sequence.

In the case of separate coding and in a case that the HARQ feedback information is a NACK, the first device may not transmit the sensing result feedback information corresponding to the one or more sensing signals.

It may be understood that, in the case of separate coding, the HARQ feedback information is independent from the sensing result feedback information, and coding of the sensing result feedback information does not affect coding of the HARQ feedback information. In other words, during the separate coding, a change of a quantity of bits of the sensing result feedback information does not affect demodulation of the HARQ feedback information. Therefore, in a case that the HARQ feedback information is a NACK, the sensing result feedback information is not fed back, thereby reducing communication overheads.

In the case of common coding and in a case that the HARQ feedback information is a NACK, the first device may transmit the sensing result feedback information, and a bit corresponding to the sensing result feedback information is a preset value.

It may be understood that, in the case of common coding and if a quantity of bits corresponding to the sensing result feedback information changes (for example, in a case that the sensing result feedback information is not sent, the quantity of bits is 0), demodulation of the HARQ feedback information may be affected. Regardless of whether the HARQ feedback information is an ACK or a NACK, a bit corresponding to the sensing result feedback information needs to be provided and a length of the bit maintains unchanged. Therefore, the bit corresponding to the sensing result feedback information is set to be a preset value, so that the HARQ feedback information can be demodulated correctly.

A time domain resource and/or a frequency domain resource used for feedback of sensing result information may be determined by using control information corresponding to the one or more sensing signals.

In some embodiments, the control information may include a second indicator field, and the second indicator field may be used to indicate a time domain resource and/or a frequency domain resource occupied by the sensing result feedback information.

The second indicator field may also be referred to as a sensing result feedback resource indicator field. The sensing result feedback resource indicator field may include a time domain resource indicator field and/or a frequency domain resource indicator field. In some embodiments, the time domain resource indicator field may indicate an absolute location of a time domain resource in which the sensing result feedback information is located. In some embodiments, the time domain resource indicator field may indicate a relative location of a time domain resource in which the one or more sensing signals are located. In some embodiments, the time domain resource indicator field may indicate a relative location of a time domain resource in which the control information corresponding to the one or more sensing signals is located. The frequency domain resource indicator field may indicate an absolute location of a frequency domain resource in which the sensing result feedback information is located, or a relative location within a preset frequency domain range in which the receive end receives the one or more sensing signals.

In an example in which the second indicator field indicates a time domain resource occupied by the sensing result feedback information, the second indicator field may be used to indicate a time offset between the sensing result feedback information and a second time unit. The second time unit may be determined based on a time unit in which the one or more sensing signals are located, or the second time unit may be determined based on a time unit in which the control information corresponding to the one or more sensing signals is located. For example, the second time unit may be a first-ranked time unit or a last time unit occupied by the one or more sensing signals. For example, the second time unit may be a first-ranked time unit or a last time unit in which the control information corresponding to the one or more sensing signals is located.

In an embodiment, if the time unit in which the at least one sensing signal or the control information corresponding to the at least one sensing signal is located is n, and the second indicator field indicates that an offset between the time unit n and the time unit in which the sensing result feedback information is located is k, the time domain resource in which the sensing result feedback information is located is determined based on the time unit n and the offset k. For example, if a subcarrier spacing (subcarrier spacing, SCS) of the control information is the same as that of the sensing result feedback information, the time unit in which the sensing result feedback information is located is n+k, where n may be an integer greater than or equal to 0, and k may be an integer greater than or equal to 0.

The time domain resource occupied by the sensing result feedback information may be explicitly indicated by the control information. In some embodiments, the time domain resource occupied by the sensing result feedback information may be directly indicated by using the second indicator field. The time domain resource occupied by the sensing result feedback information may be implicitly determined. In some embodiments, the time domain resource occupied by the sensing result feedback information may be implicitly determined based on the time domain resource and/or the frequency domain resource in which the control information corresponding to the one or more sensing signals and/or the one or more sensing signals are located, according to a preset or configured mapping relationship.

The following describes in detail the communication method provided in this application by using Embodiment 1 to Embodiment 4.

### Embodiment 1

A CSI-RS signal in a communications system (for example, an NR system) functions as the sensing signal. The sensing signal may be indicated for sensing and/or communication in the following manners 1 to 4.

Manner 1: Configuration information may include a first IE and a second IE. A CSI-RS configured by the first IE may be used for sensing, and a CSI-RS configured by the second IE may be used for communication. In a case that both the first IE and the second IE are configured, a CSI-RS may be used for both communication and sensing. The CSI-RS used for sensing and communication may further include a sub-function of a finer granularity. Details are not described herein.

Manner 2: A CSI-RS used for sensing and a CSI-RS used for communication may be configured by using a same IE, and in this IE, configuration information corresponding to the CSI-RS used for sensing must include a first parameter (parameter 1). In other words, if the first parameter is configured, the CSI-RS is configured for sensing. In some embodiments, configuration information corresponding to the CSI-RS used for communication may not include the first parameter, or the configuration information corresponding to the CSI-RS used for communication must include a second parameter (parameter 2).

Manner 3: A CSI-RS used for sensing and a CSI-RS used for communication may be configured by using a same IE, and this IE may include a third parameter. In configuration information corresponding to the CSI-RS used for sensing, a value of the third parameter must be a first value (value 1). In other words, if the value of the third parameter is configured to be the first value, it indicates that the CSI-RS is configured for sensing. In some embodiments, in configuration information corresponding to the CSI-RS used for communication, the value of the third parameter must be a second value (value 2) or is not the first value.

### Embodiment 2

A PDSCH or PSSCH channel is reused for sensing. A transmit end of the sensing signal may send a PDSCH channel or a PSSCH channel, and the PDSCH channel or the PSSCH channel may be used for both communication and sensing.

The Y^{th} processing time may be a fourth processing time. In other words, the Y^{th} processing time may be a sensing processing time. The Y^{th} processing time may be specified in a protocol or configured by a sensing control node. If a time unit in which a sensing result feedback corresponding to the PDSCH or the PSSCH is located is in the Y^{th} processing time after a time unit in which the PDSCH or the PSSCH is located (or a time unit in which control information corresponding to the PDSCH or the PSSCH is located), a receive node of a first signal reports valid sensing result feedback information. Y may be an integer greater than or equal to 0.

The X^{th} processing time may be a fifth processing time. In other words, the X^{th} processing time may be a communication processing time. The X^{th} processing time may be specified in a protocol or configured by a sensing control node. If a time unit in which an HARQ feedback corresponding to the PDSCH or the PSSCH is located is in the X^{th} processing time after a time unit in which the PDSCH or the PSSCH is located (or a time unit in which control information corresponding to the PDSCH or the PSSCH is located), a receive end of the sensing signal may report valid HARQ feedback information. X may be an integer greater than or equal to 0.

### Embodiment 3

APDSCH or PSSCH channel is reused for sensing. A transmit end of the sensing signal may send a PDSCH channel or a PSSCH channel, and the PDSCH channel or the PSSCH channel may be used for both communication and sensing.

If the PDSCH or the PSSCH is correctly received, a receive end feeds back ACK information and sensing result information; or if the PDSCH or the PSSCH fails to be correctly received, a receive end feeds back only NACK information and does not feed back sensing result information, or sets a bit corresponding to the sensing result information to be a preset value. HARQ feedback information and sensing result information may be separately coded or jointly coded.

### Embodiment 4

A PDSCH or PSSCH channel is reused for sensing. A transmit end of the sensing signal may send a PDSCH channel or a PSSCH channel, and the PDSCH channel or the PSSCH channel may be used for both communication and sensing.

Control information corresponding to one or more sensing signals may include a first indicator field. The first indicator field may be referred to as a sensing indicator field. The sensing indicator field may be 1 bit, indicating whether the one or more sensing signals are used for sensing or whether a receive end needs to feed back sensing result information. For example, 1 may indicate that the one or more sensing signals are used for sensing, and 0 may indicate that the one or more sensing signals are not used for sensing.

Control information corresponding to the one or more sensing signals may include a second indicator field. The second indicator field may also be referred to as a sensing result feedback resource indicator field. The sensing result feedback resource indicator field may include a time domain resource indicator field and/or a frequency domain resource indicator field, and the time domain resource indicator field may indicate an absolute location of a time domain resource in which sensing result feedback information is located or a relative location of a time domain resource in which the one or more sensing signals or the control information corresponding to the one or more sensing signals is located. The frequency domain resource indicator field may indicate an absolute position of a frequency domain resource in which the sensing result feedback information is located, or a relative location within a preset frequency domain range in which the receive end receives the one or more sensing signals.

It should be noted that the foregoing time unit may include a subframe, a frame, a slot, a sub-slot, a symbol, a symbol set, a second, a millisecond, or the like.

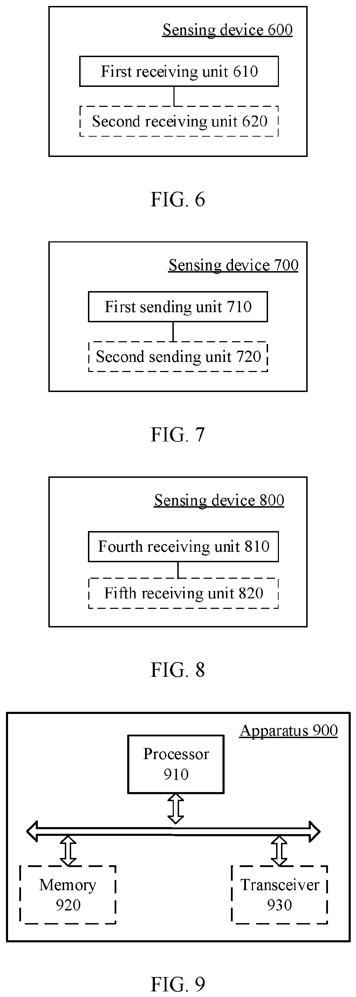

The method embodiments of this application are described in detail above with reference to FIG. 1 to FIG. 5. Apparatus embodiments of this application are described in detail below with reference to FIG. 6 to FIG. 9. It should be understood that the description of the method embodiments corresponds to the description of the apparatus embodiments, and therefore, for parts that are not described in detail, reference may be made to the foregoing method embodiments.

FIG. 6 is a schematic structural diagram of a communications device 600 according to an embodiment of this application. The communications device 600 may be a first device, and the communications device 600 may include a first receiving unit 610.

The first receiving unit is configured to receive one or more sensing signals, where the sensing signal is a reference signal and/or is a signal carried on a data channel.

In some embodiments, whether the one or more sensing signals are used for sensing and/or are used for communication is determined based on first information.

In some embodiments, the communications device 600 further includes a second receiving unit 620. The second receiving unit 620 is configured to receive configuration information corresponding to one or more sensing signals, where the configuration information includes the first information.

In some embodiments, in a case that the one or more sensing signals are used for sensing, the configuration information includes a first information element, and the first information element is used to carry the first information; or in a case that the one or more sensing signals are used for communication, the configuration information includes a second information element, and the second information element is used to carry the first information; or in a case that the one or more sensing signals are used for communication and sensing, the configuration information includes a third information element, and the third information element is used to carry the first information.

In some embodiments, in a case that the one or more sensing signals are used for sensing, the configuration information includes a first parameter or does not include a second parameter, and the first parameter is used to indicate a part of the first information; and/or in a case that the one or more sensing signals are used for communication, the configuration information includes the second parameter or does not include the first parameter, and the second parameter is used to indicate a part of the first information.

In some embodiments, the first information is carried in a third parameter. In a case that the one or more sensing signals are used for sensing, a value of the third parameter in the configuration information includes a first value or a value of the third parameter does not include a second value; and/or in a case that the one or more sensing signals are used for communication, the third parameter in the configuration information includes the second value or the value of the third parameter does not include the first value.

In some embodiments, the communications device 600 further includes a third receiving unit. The third receiving unit is configured to receive control information corresponding to the one or more sensing signals, where the control information includes the first information.

In some embodiments, the first information is carried in a first indicator field of the control information.

In some embodiments, the sensing signal is the reference signal, and result feedback information corresponding to the one or more sensing signals is periodic, semi-persistent, or aperiodic.

In some embodiments, in a case that the result feedback information corresponding to the one or more sensing signals is periodic or semi-persistent, and in a case that the result feedback information is used to indicate communication measurement feedback information, the result feedback information is obtained based on a first sensing signal, and the first sensing signal is a sensing signal sent in a time unit no later than a first reference time before a first time unit; and/or in a case that the result feedback information is used to indicate sensing result feedback information, the result feedback information is obtained based on a second sensing signal, and the second sensing signal is a sensing signal sent or received in a time unit no later than a second reference time before the first time unit; and/or in a case that the result feedback information is used to indicate the sensing result feedback information and the communication measurement feedback information, the result feedback information is obtained based on a third sensing signal, and the third sensing signal is a sensing signal sent or received in a time unit no later than a third reference time before the first time unit, where the third reference time is obtained based on the first reference time and the second reference time.

In some embodiments, the first time unit is determined based on a time unit occupied by the result feedback information.

In some embodiments, in a case that the result feedback information corresponding to the one or more sensing signals is aperiodic, and in a case that the result feedback information is used to indicate sensing result feedback information and a time unit in which the result feedback information is located is not earlier than a first processing time after a second time unit, the sensing result feedback information indicated by the result feedback information is valid; and/or in a case that the result feedback information is used to indicate communication measurement feedback information and the time unit in which the result feedback information is located is not earlier than a second processing time after the second time unit, the communication measurement feedback information indicated by the result feedback information is valid; and/or in a case that the result feedback information is used to indicate the sensing result feedback information and the communication measurement feedback information and the time unit in which the result feedback information is located is not earlier than a third processing time after the second time unit, both the communication measurement feedback information and the sensing result feedback information that are indicated by the result feedback information are valid, where the third processing time is determined based on the first processing time and the second processing time.

In some embodiments, the sensing signal is the signal carried on the data channel.

In some embodiments, a time unit in which hybrid automatic repeat request HARQ feedback information corresponding to the one or more sensing signals is located is not later than a time unit in which sensing result feedback information corresponding to the one or more sensing signals is located.

In some embodiments, sensing result feedback information and HARQ feedback information corresponding to the one or more sensing signals are transmitted in a same time unit.

In some embodiments, the HARQ feedback information and the sensing result feedback information is coded by using separate coding manners or a common coding manner.

In some embodiments, in a case that HARQ feedback information corresponding to the one or more sensing signals is an acknowledgement ACK, the first device sends sensing result feedback information corresponding to the one or more sensing signals; or in a case that HARQ feedback information corresponding to the one or more sensing signals is a negative acknowledgement NACK, the first device does not send sensing result feedback information corresponding to the one or more sensing signals, or the first device sends the sensing result feedback information, where a bit corresponding to the sensing result feedback information is a preset value.

In some embodiments, in a case that the HARQ feedback information and the sensing result feedback information is coded by using separate coding manners, the communications device 600 is further configured to: in a case that the HARQ feedback information is a NACK, skip sending the sensing result feedback information.

In some embodiments, in a case of common coding, the communications device 600 is further configured to: in a case that the HARQ feedback information is a NACK, send the sensing result feedback information, where a bit corresponding to the sensing result feedback information is a preset value.

In some embodiments, a time domain resource and/or a frequency domain resource occupied by sensing result feedback information of the one or more sensing signals are/is determined by using control information corresponding to the one or more sensing signals.

In some embodiments, if a time unit in which sensing result feedback information corresponding to the one or more sensing signals is located is not earlier than a fourth processing time after a second time unit, the sensing result feedback information corresponding to the one or more sensing signals is valid; and/or if a time unit in which HARQ feedback information corresponding to the one or more sensing signals is located is not earlier than a fifth processing time after the second time unit, the HARQ feedback information corresponding to the one or more sensing signals is valid; and/or if a time unit in which the HARQ feedback information and the sensing result feedback information corresponding to the one or more sensing signals is located is not earlier than a sixth processing time after the second time unit, both the HARQ feedback information and the sensing result feedback information corresponding to the one or more sensing signals is valid, where the sixth processing time is determined based on the fourth processing time and the fifth processing time.

In some embodiments, the fourth processing time is greater than or equal to the fifth processing time.

In some embodiments, the second time unit is determined based on a time unit in which the one or more sensing signals are located.

In some embodiments, the second time unit is a last time unit or a first-ranked time unit in which the one or more sensing signals are located.

In some embodiments, the second time unit is determined based on a time unit in which control information corresponding to the one or more sensing signals is located.

In some embodiments, the second time unit is a last time unit or a first-ranked time unit in which the control information is located.

In some embodiments, the data channel includes one or more of a physical downlink shared channel PDSCH, a physical uplink shared channel PUSCH, or a physical sidelink shared channel PSSCH, and the signal carried on the data channel includes a data signal or a demodulation reference signal DMRS carried on the data channel; or the reference signal includes one or more of a synchronization signal block SSB, a channel state information-reference signal CSI-RS, a PT-RS, a positioning reference signal PRS, or a sounding reference signal SRS.

FIG. 7 is a schematic structural diagram of a communications device 700 according to an embodiment of this application. The communications device 700 is a second device, and the communications device 700 includes a first sending unit 710.

The first sending unit 710 is configured to send one or more sensing signals, where the sensing signal is a reference signal and/or is a signal carried on a data channel.

In some embodiments, whether the one or more sensing signals are used for sensing and/or are used for communication is determined based on first information.

In some embodiments, the first information is included in configuration information corresponding to the one or more sensing signals.

In some embodiments, in a case that the one or more sensing signals are used for sensing, the configuration information includes a first information element, and the first information element is used to carry the first information; or in a case that the one or more sensing signals are used for communication, the configuration information includes a second information element, and the second information element is used to carry the first information; or in a case that the one or more sensing signals are used for communication and sensing, the configuration information includes a third information element, and the third information element is used to carry the first information.

In some embodiments, the communications device 700 may further include a second sending unit 720. The second sending unit 720 is configured to send the configuration information.

In some embodiments, in a case that the one or more sensing signals are used for sensing, the configuration information includes a first parameter or does not include a second parameter, and the first parameter is used to indicate a part or all of the first information; and/or in a case that the one or more sensing signals are used for communication, the configuration information includes the second parameter or does not include the first parameter, and the second parameter is used to indicate a part or all of the first information.

In some embodiments, the first information is carried in a third parameter. In a case that the one or more sensing signals are used for sensing, a value of the third parameter in the configuration information includes a first value or a value of the third parameter does not include a second value; and/or in a case that the one or more sensing signals are used for communication, the value of the third parameter in the configuration information includes the second value or the value of the third parameter does not include the first value.

In some embodiments, the first information is included in control information corresponding to the one or more sensing signals.

In some embodiments, the first information is carried in a first indicator field of the control information.

In some embodiments, the data channel includes one or more of a physical downlink shared channel PDSCH, a physical uplink shared channel PUSCH, or a physical sidelink shared channel PSSCH, and the signal carried on the data channel includes a data signal or a demodulation reference signal DMRS carried on the data channel; or the reference signal includes one or more of a synchronization signal block SSB, a channel state information-reference signal CSI-RS, a PT-RS, a positioning reference signal PRS, or a sounding reference signal SRS.

FIG. 8 is a schematic structural diagram of a communications device 800 according to an embodiment of this application. The communications device 800 may be a third device, and the communications device 800 may include a fourth receiving unit 810.

The fourth receiving unit 810 is configured to receive result feedback information corresponding to one or more sensing signals, where the sensing signal is a reference signal and/or is a signal carried on a data channel.

In some embodiments, the sensing signal is the reference signal, and the result feedback information corresponding to the one or more sensing signals is periodic, semi-persistent, or aperiodic.

In some embodiments, in a case that the result feedback information corresponding to the one or more sensing signals is periodic or semi-persistent, and in a case that the result feedback information is used to indicate communication measurement feedback information, the result feedback information is obtained based on a first sensing signal, and the first sensing signal is a sensing signal sent or received in a time unit no later than a first reference time before a first time unit; and/or in a case that the result feedback information is used to indicate sensing result feedback information, the result feedback information is obtained based on a second sensing signal, and the second sensing signal is a sensing signal sent or received in a time unit no later than a second reference time before the first time unit; and/or in a case that the result feedback information is used to indicate the sensing result feedback information and the communication measurement feedback information, the result feedback information is obtained based on a third sensing signal, and the third sensing signal is a sensing signal sent or received in a time unit no later than a third reference time before the first time unit, where the third reference time is obtained based on the first reference time and the second reference time.

In some embodiments, the first time unit is determined based on a time unit occupied by the result feedback information.

In some embodiments, in a case that the result feedback information corresponding to the one or more sensing signals is aperiodic, and in a case that the result feedback information is used to indicate sensing result feedback information and a time unit in which the result feedback information is located is not earlier than a first processing time after a second time unit, the sensing result feedback information indicated by the result feedback information is valid; and/or in a case that the result feedback information is used to indicate communication measurement feedback information and the time unit in which the result feedback information is located is not earlier than a second processing time after the second time unit, the communication measurement feedback information indicated by the result feedback information is valid; and/or in a case that the result feedback information is used to indicate the sensing result feedback information and the communication measurement feedback information, and if the time unit in which the result feedback information is located is not earlier than a third processing time after the second time unit, both the communication measurement feedback information and the sensing result feedback information that are indicated by the result feedback information are valid, where the third processing time is determined based on the first processing time and the second processing time.

In some embodiments, the sensing signal is the signal carried on the data channel, and the result feedback information includes hybrid automatic repeat request HARQ feedback information corresponding to the one or more sensing signals and/or sensing result feedback information corresponding to the one or more sensing signals.

In some embodiments, a time unit in which the HARQ feedback information corresponding to the one or more sensing signals is located is not later than a time unit in which the sensing result feedback information corresponding to the one or more sensing signals is located.

In some embodiments, the sensing result feedback information and the HARQ feedback information corresponding to the one or more sensing signals is transmitted in a same time unit.

In some embodiments, the HARQ feedback information and the sensing result feedback information is coded by using separate coding manners or a common coding manner.

In some embodiments, the communications device 800 is further configured to: in a case that the HARQ feedback information is an acknowledgement ACK, receive the sensing result feedback information; or in a case that the HARQ feedback information is a negative acknowledgement NACK, skip receiving, by the third device, the sensing result feedback information, or receive, by the third device, the sensing result feedback information, where a bit corresponding to the sensing result feedback information is a preset value.

In some embodiments, the communications device 800 further includes a fifth receiving unit 820. The fifth receiving unit 820 may be configured to receive the sensing result feedback information.

In some embodiments, in a case that the HARQ feedback information and the sensing result feedback information is coded by using separate coding manners, the communications device 800 is further configured to: in a case that the HARQ feedback information is a NACK, skip receiving the sensing result feedback information.

In some embodiments, in a case that the HARQ feedback information and the sensing result feedback information is coded by using a common coding manner, the communications device 800 is further configured to: in a case that the HARQ feedback information is a NACK, receive the sensing result feedback information, where a bit corresponding to the sensing result feedback information is a preset value.

In some embodiments, a time domain resource and/or a frequency domain resource occupied by the sensing result feedback information of the one or more sensing signals are/is determined by using control information corresponding to the one or more sensing signals.

In some embodiments, if a time unit in which the sensing result feedback information corresponding to the one or more sensing signals is located is not earlier than a fourth processing time after a second time unit, the sensing result feedback information corresponding to the one or more sensing signals is valid; and/or if a time unit in which the HARQ feedback information corresponding to the one or more sensing signals is located is not earlier than a fifth processing time after the second time unit, the HARQ feedback information corresponding to the one or more sensing signals is valid; and/or if a time unit in which the HARQ feedback information and the sensing result feedback information corresponding to the one or more sensing signals is located is not earlier than a sixth processing time after the second time unit, both the HARQ feedback information and the sensing result feedback information corresponding to the one or more sensing signals is valid, where the sixth processing time is determined based on the fourth processing time and the fifth processing time.

In some embodiments, the fourth processing time is greater than or equal to the fifth processing time.

In some embodiments, the second time unit is determined based on a time unit in which the one or more sensing signals are located.

In some embodiments, the second time unit is a last time unit or a first-ranked time unit in which the one or more sensing signals are located.

In some embodiments, the second time unit is determined based on a time unit in which control information corresponding to the one or more sensing signals is located.

In some embodiments, the second time unit is a last time unit or a first-ranked time unit in which the control information is located.

In some embodiments, the data channel includes one or more of a physical downlink shared channel PDSCH, a physical uplink shared channel PUSCH, or a physical sidelink shared channel PSSCH, and the signal carried on the data channel includes a data signal or a demodulation reference signal DMRS carried on the data channel; or the reference signal includes one or more of a synchronization signal block SSB, a channel state information-reference signal CSI-RS, a PT-RS, a positioning reference signal PRS, or a sounding reference signal SRS.

FIG. 9 is a schematic structural diagram of a communications apparatus according to an embodiment of this application. Dashed lines in FIG. 9 indicate that the unit or module is optional. The apparatus 900 may be configured to implement the methods described in the foregoing method embodiments. The apparatus 900 may be a chip, a terminal device, an access network device, or a core network device. The apparatus 900 may be a first device, a second device, or a third device.

The apparatus 900 may include one or more processors 910. The processor 910 may allow the apparatus 900 to implement the methods described in the foregoing method embodiments. The processor 910 may be a general-purpose processor a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor the like.

The apparatus 900 may further include one or more memories 920. The memory 920 stores a program, where the program may be executed by the processor 910, to cause the processor 910 to execute the methods described in the foregoing method embodiments. The memory 920 may be independent of the processor 910 or may be integrated into the processor 910.

The apparatus 900 may further include a transceiver 930. The processor 910 may communicate with another device or chip by using the transceiver 930. For example, the processor 910 may send data to and receive data from another device or chip by using the transceiver 930.

In some embodiments, the first receiving unit 610 in FIG. 6 may be the transceiver 930 in FIG. 9, and the transceiver 930 may be configured to receive one or more sensing signals. In some embodiments, the first sending unit 710 in FIG. 7 may be the transceiver 930 in FIG. 9, and the transceiver 930 may be configured to send one or more sensing signals. In some embodiments, the fourth receiving unit 810 in FIG. 8 may be the transceiver 930 in FIG. 9, and the transceiver 930 may be configured to receive result feedback information corresponding to one or more sensing signals.

An embodiment of this application further provides a computer-readable storage medium, configured to store a program. The computer-readable storage medium may be applied to the communications device provided in embodiments of this application, and the program causes a computer to execute the methods to be executed by the communications device in embodiments of this application.

An embodiment of this application further provides a computer program product. The computer program product includes a program. The computer program product may be applied to the communications device provided in embodiments of this application, and the program causes a computer to execute the methods to be executed by the communications device in embodiments of this application.

An embodiment of this application further provides a computer program. The computer program may be applied to the communications device provided in embodiments of this application, and the computer program causes a computer to execute the methods to be executed by the communications device in embodiments of this application.

It should be understood that the terms "system" and "network" in this application may be used interchangeably. In addition, the terms used in this application are only used to explain the specific embodiments of this application, and are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a nonexclusive inclusion.

In embodiments of this application, "indicate" mentioned herein may refer to a direct indication, or may refer to an indirect indication, or may mean that there is an association. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association between A and B.

In embodiments of this application, "B corresponding to A" means that B is associated with A, and B may be determined based on A. However, it should be further understood that, determining B based on A does not mean determining B based only on A, but instead B may be determined based on A and/or other information.

In embodiments of this application, the term "correspond" may mean that there is a direct or indirect correspondence between the two, or may mean that there is an association between the two, or may mean that there is a relationship such as indicating and being indicated, or configuring and being configured.

In embodiments of this application, "predefined" or "pre-configured" may be implemented by prestoring corresponding code or a corresponding table in a device (for example, including a terminal device and a network device) or in other manners that can be used for indicating related information, and a specific implementation thereof is not limited in this application. For example, the "predefining" may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" merely describes an association between associated objects, and represents that there may be three relationships. For example, A and/or B may represent three cases: only A exists, both A and B exist, and only B exists. In addition, the character "/" in this specification generally indicates an "or" relationship between associated objects.

In embodiments of this application, sequence numbers of the foregoing processes do not mean execution sequences. The execution sequences of the processes should be determined according to functions and internal logic of the processes, and should not be construed as any limitation on implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center via a wired (such as a coaxial cable, an optical fiber, or a digital subscriber line (DSL)) manner or a wireless (such as infrared, wireless, or microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a first device, one or more sensing signals, wherein the sensing signal is a reference signal and/or is a signal carried on a data channel.

2. The method according to claim 1, wherein whether the one or more sensing signals are used for sensing and/or are used for communication is determined based on first information.

3. The method according to claim 2, wherein the method further comprises:
receiving, by the first device, configuration information corresponding to the one or more sensing signals,
wherein the configuration information comprises the first information.

4. The method according to claim 3, wherein in a case that the one or more sensing signals are used for sensing, the configuration information comprises a first information element, and the first information element is used to carry the first information; or
in a case that the one or more sensing signals are used for communication, the configuration information comprises a second information element, and the second information element is used to carry the first information; or
in a case that the one or more sensing signals are used for communication and sensing, the configuration information comprises a third information element, and the third information element is used to carry the first information.

5. The method according to claim 3,
wherein in a case that the one or more sensing signals are used for sensing, the configuration information comprises a first parameter or does not comprise a second parameter, and the first parameter is used to indicate a part or all of the first information; and/or
in a case that the one or more sensing signals are used for communication, the configuration information comprises the second parameter or does not comprise the first parameter, and the second parameter is used to indicate a part or all of the first information.

6. The method according to claim 3, wherein the configuration information comprises a third parameter, and the third parameter is used to indicate the first information; and
in a case that the one or more sensing signals are used for sensing, a value of the third parameter comprises a first value or a value of the third parameter does not comprise a second value; and/or
in a case that the one or more sensing signals are used for communication, a value of the third parameter comprises the second value or the value of the third parameter does not comprise the first value.

7. The method according to claim 2, wherein the method further comprises:
receiving, by the first device, control information corresponding to the one or more sensing signals,
wherein the control information comprises the first information.

8. The method according to claim 7, wherein the first information is carried in a first indicator field of the control information.

9. The method according to any one of claims 1 to 8, wherein the sensing signal is the reference signal, and result feedback information corresponding to the one or more sensing signals is periodic, semi-persistent, or aperiodic.

10. The method according to claim 9,
wherein in a case that the result feedback information corresponding to the one or more sensing signals is periodic or semi-persistent, and
in a case that the result feedback information is used to indicate communication measurement feedback information, the result feedback information is obtained based on a first sensing signal, and the first sensing signal is a sensing signal sent or received in a time unit no later than a first reference time before a first time unit; and/or
in a case that the result feedback information is used to indicate sensing result feedback information, the result feedback information is obtained based on a second sensing signal, and the second sensing signal is a sensing signal sent or received in a time unit no later than a second reference time before the first time unit; and/or
in a case that the result feedback information is used to indicate the sensing result feedback information and the communication measurement feedback information, the result feedback information is obtained based on a third sensing signal, and the third sensing signal is a sensing signal sent or received in a time unit no later than a third reference time before the first time unit, wherein the third reference time is obtained based on the first reference time and the second reference time.

11. The method according to claim 10, wherein the first time unit is determined based on a time unit occupied by the result feedback information.

12. The method according to claim 9, wherein in a case that the result feedback information corresponding to the one or more sensing signals is aperiodic, and
in a case that the result feedback information is used to indicate sensing result feedback information and a time unit in which the result feedback information is located is not earlier than a first processing time after a second time unit, the sensing result feedback information indicated by the result feedback information is valid; and/or
in a case that the result feedback information is used to indicate communication measurement feedback information and the time unit in which the result feedback information is located is not earlier than a second processing time after the second time unit, the communication measurement feedback information indicated by the result feedback information is valid; and/or
in a case that the result feedback information is used to indicate the sensing result feedback information and the communication measurement feedback information and the time unit in which the result feedback information is located is not earlier than a third processing time after the second time unit, both the communication measurement feedback information and the sensing result feedback information that are indicated by the result feedback information is valid, wherein the third processing time is determined based on the first processing time and the second processing time.

13. The method according to any one of claims 1 to 8, wherein the sensing signal is the signal carried on the data channel.

14. The method according to claim 13, wherein a time unit in which hybrid automatic repeat request HARQ feedback information corresponding to the one or more sensing signals is located is not later than a time unit in which sensing result feedback information corresponding to the one or more sensing signals is located.

15. The method according to claim 13, wherein sensing result feedback information and HARQ feedback information corresponding to the one or more sensing signals is transmitted in a same time unit.

16. The method according to claim 15, wherein the HARQ feedback information and the sensing result feedback information is coded by using separate coding manners or a common coding manner.

17. The method according to any one of claims 13 to 16, wherein the method further comprises:
in a case that HARQ feedback information corresponding to the one or more sensing signals is an acknowledgement ACK, sending, by the first device, sensing result feedback information corresponding to the one or more sensing signals; or
in a case that HARQ feedback information corresponding to the one or more sensing signals is a negative acknowledgement NACK, skipping sending, by the first device, sensing result feedback information corresponding to the one or more sensing signals, or sending, by the first device, the sensing result feedback information, wherein a bit corresponding to the sensing result feedback information is a preset value.

18. The method according to claim 16, wherein in a case that the HARQ feedback information and the sensing result feedback information is coded by using separate coding manners, the method further comprises:
in a case that the HARQ feedback information is a NACK, skipping sending, by the first device, the sensing result feedback information.

19. The method according to claim 16, wherein in a case that the HARQ feedback information and the sensing result feedback information is coded by using a common coding manner, the method further comprises:
in a case that the HARQ feedback information is a NACK, sending, by the first device, the sensing result feedback information, wherein a bit corresponding to the sensing result feedback information is a preset value.

20. The method according to any one of claims 13 to 19, wherein a time domain resource and/or a frequency domain resource occupied by sensing result feedback information of the one or more sensing signals are/is determined by using control information corresponding to the one or more sensing signals.

21. The method according to any one of claims 13 to 20,
wherein if a time unit in which sensing result feedback information corresponding to the one or more sensing signals is located is not earlier than a fourth processing time after a second time unit, the sensing result feedback information corresponding to the one or more sensing signals is valid; and/or
if a time unit in which HARQ feedback information corresponding to the one or more sensing signals is located is not earlier than a fifth processing time after the second time unit, the HARQ feedback information corresponding to the one or more sensing signals is valid; and/or
if a time unit in which the HARQ feedback information and the sensing result feedback information corresponding to the one or more sensing signals is located is not earlier than a sixth processing time after the second time unit, both the HARQ feedback information and the sensing result feedback information corresponding to the one or more sensing signals is valid, wherein the sixth processing time is determined based on the fourth processing time and the fifth processing time.

22. The method according to claim 21, wherein the fourth processing time is greater than or equal to the fifth processing time.

23. The method according to claim 12 or 21, wherein the second time unit is determined based on a time unit in which the one or more sensing signals are located.

24. The method according to claim 23, wherein the second time unit is a last time unit or a first-ranked time unit in which the one or more sensing signals are located.

25. The method according to claim 12 or 21, wherein the second time unit is determined based on a time unit in which control information corresponding to the one or more sensing signals is located.

26. The method according to claim 25, wherein the second time unit is a last time unit or a first-ranked time unit in which the control information is located.

27. The method according to any one of claims 1 to 26,
wherein the data channel comprises one or more of a physical downlink shared channel PDSCH, a physical uplink shared channel PUSCH, or a physical sidelink shared channel PSSCH, and the signal carried on the data channel comprises a data signal or a demodulation reference signal DMRS carried on the data channel; or
the reference signal comprises one or more of a synchronization signal block SSB, a channel state information-reference signal CSI-RS, a phase tracking reference signal PT-RS, a positioning reference signal PRS, or a sounding reference signal SRS.

28. A communication method, wherein the method comprises:
sending, by a second device, one or more sensing signals, wherein the sensing signal is a reference signal and/or is a signal carried on a data channel.

29. The method according to claim 28, whether the one or more sensing signals are used for sensing and/or are used for communication is determined based on first information.

30. The method according to claim 29, wherein the first information is comprised in configuration information corresponding to the one or more sensing signals.

31. The method according to claim 30,
wherein in a case that the one or more sensing signals are used for sensing, the configuration information comprises a first information element, and the first information element is used to carry the first information; or
in a case that the one or more sensing signals are used for communication, the configuration information comprises a second information element, and the second information element is used to carry the first information; or
in a case that the one or more sensing signals are used for communication and sensing, the configuration information comprises a third information element, and the third information element is used to carry the first information.

32. The method according to claim 30,
wherein in a case that the one or more sensing signals are used for sensing, the configuration information comprises a first parameter or does not comprise a second parameter, and the first parameter is used to indicate a part or all of the first information; and/or
in a case that the one or more sensing signals are used for communication, the configuration information comprises the second parameter or does not comprise the first parameter, and the second parameter is used to indicate a part or all of the first information.

33. The method according to claim 30, wherein the configuration information comprises a third parameter, and the third parameter is used to indicate the first information; and
in a case that the one or more sensing signals are used for sensing, a value of the third parameter comprises a first value or a value of the third parameter does not comprise a second value; and/or
in a case that the one or more sensing signals are used for communication, the value of the third parameter comprises the second value or the value of the third parameter does not comprise the first value.

34. The method according to claim 29, wherein the first information is comprised in control information corresponding to the one or more sensing signals.

35. The method according to claim 34, wherein the first information is carried in a first indicator field of the control information.

36. The method according to any one of claims 28 to 35,
wherein the data channel comprises one or more of a physical downlink shared channel PDSCH, a physical uplink shared channel PUSCH, or a physical sidelink shared channel PSSCH, and the signal carried on the data channel comprises a data signal or a demodulation reference signal DMRS carried on the data channel; or
the reference signal comprises one or more of a synchronization signal block SSB, a channel state information-reference signal CSI-RS, a phase tracking reference signal PT-RS, a positioning reference signal PRS, or a sounding reference signal SRS.

37. A communication method, wherein the method comprises:
receiving, by a third device, result feedback information corresponding to one or more sensing signals, wherein the sensing signal is a reference signal and/or is a signal carried on a data channel.

38. The method according to claim 37, wherein the sensing signal is the reference signal, and the result feedback information corresponding to the one or more sensing signals is periodic, semi-persistent, or aperiodic.

39. The method according to claim 38,
wherein in a case that the result feedback information corresponding to the one or more sensing signals is periodic or semi-persistent, andin a case that the result feedback information is used to indicate communication measurement feedback information, the result feedback information is obtained based on a first sensing signal, and the first sensing signal is a sensing signal sent or received in a time unit no later than a first reference time before a first time unit; and/or
in a case that the result feedback information is used to indicate sensing result feedback information, the result feedback information is obtained based on a second sensing signal, and the second sensing signal is a sensing signal sent or received in a time unit no later than a second reference time before the first time unit; and/or
in a case that the result feedback information is used to indicate the sensing result feedback information and the communication measurement feedback information, the result feedback information is obtained based on a third sensing signal, and the third sensing signal is a sensing signal sent or received in a time unit no later than a third reference time before the first time unit, wherein the third reference time is obtained based on the first reference time and the second reference time.

40. The method according to claim 39, wherein the first time unit is determined based on a time unit occupied by the result feedback information.

41. The method according to claim 38, wherein in a case that the result feedback information corresponding to the one or more sensing signals is aperiodic, and
in a case that the result feedback information is used to indicate sensing result feedback information and a time unit in which the result feedback information is located is not earlier than a first processing time after a second time unit, the sensing result feedback information indicated by the result feedback information is valid; and/or
in a case that the result feedback information is used to indicate communication measurement feedback information and the time unit in which the result feedback information is located is not earlier than a second processing time after the second time unit, the communication measurement feedback information indicated by the result feedback information is valid; and/or
in a case that the result feedback information is used to indicate the sensing result feedback information and the communication measurement feedback information and the time unit in which the result feedback information is located is not earlier than a third processing time after the second time unit, both the communication measurement feedback information and the sensing result feedback information indicated by the result feedback information is valid, wherein the third processing time is determined based on the first processing time and the second processing time.

42. The method according to claim 37, wherein the sensing signal is the signal carried on the data channel, and the result feedback information comprises hybrid automatic repeat request HARQ feedback information corresponding to the one or more sensing signals and/or sensing result feedback information corresponding to the one or more sensing signals.

43. The method according to claim 42, wherein a time unit in which the HARQ feedback information corresponding to the one or more sensing signals is located is not later than a time unit in which the sensing result feedback information corresponding to the one or more sensing signals is located.

44. The method according to claim 42, wherein the sensing result feedback information and the HARQ feedback information corresponding to the one or more sensing signals is transmitted in a same time unit.

45. The method according to claim 44, wherein the HARQ feedback information and the sensing result feedback information is coded by using separate coding manners or a common coding manner.

46. The method according to any one of claims 42 to 45, wherein the method further comprises:
in a case that the HARQ feedback information is an acknowledgement ACK, receiving, by the third device, the sensing result feedback information; or
in a case that the HARQ feedback information is a negative acknowledgement NACK, skipping receiving, by the third device, the sensing result feedback information, or receiving, by the third device, the sensing result feedback information, wherein a bit corresponding to the sensing result feedback information is a preset value.

47. The method according to claim 45, wherein in a case that the HARQ feedback information and the sensing result feedback information is coded by using separate coding manners, the method further comprises:
in a case that the HARQ feedback information is a NACK, skipping receiving, by the third device, the sensing result feedback information.

48. The method according to claim 45, wherein in a case that the HARQ feedback information and the sensing result feedback information is coded by using a common coding manner, the method further comprises:
in a case that the HARQ feedback information is a NACK, receiving, by the third device, the sensing result feedback information, wherein a bit corresponding to the sensing result feedback information is a preset value.

49. The method according to any one of claims 42 to 48, wherein a time domain resource and/or a frequency domain resource occupied by the sensing result feedback information of the one or more sensing signals are/is determined by using control information corresponding to the one or more sensing signals.

50. The method according to any one of claims 42 to 49, wherein if a time unit in which the sensing result feedback information corresponding to the one or more sensing signals is located is not earlier than a fourth processing time after a second time unit, the sensing result feedback information corresponding to the one or more sensing signals is valid; and/or
if a time unit in which the HARQ feedback information corresponding to the one or more sensing signals is located is not earlier than a fifth processing time after the second time unit, the HARQ feedback information corresponding to the one or more sensing signals is valid; and/or
if a time unit in which the HARQ feedback information and the sensing result feedback information corresponding to the one or more sensing signals is located is not earlier than a sixth processing time after the second time unit, both the HARQ feedback information and the sensing result feedback information corresponding to the one or more sensing signals is valid, wherein the sixth processing time is determined based on the fourth processing time and the fifth processing time.

51. The method according to claim 50, wherein the fourth processing time is greater than or equal to the fifth processing time.

52. The method according to claim 41 or 50, wherein the second time unit is determined based on a time unit in which the one or more sensing signals are located.

53. The method according to claim 52, wherein the second time unit is a last time unit or a first-ranked time unit in which the one or more sensing signals are located.

54. The method according to claim 41 or 50, wherein the second time unit is determined based on a time unit in which control information corresponding to the one or more sensing signals is located.

55. The method according to claim 54, wherein the second time unit is a last time unit or a first-ranked time unit in which the control information is located.

56. The method according to any one of claims 37 to 55,
wherein the data channel comprises one or more of a physical downlink shared channel PDSCH, a physical uplink shared channel PUSCH, or a physical sidelink shared channel PSSCH, and the signal carried on the data channel comprises a data signal or a demodulation reference signal DMRS carried on the data channel; or
the reference signal comprises one or more of a synchronization signal block SSB, a channel state information-reference signal CSI-RS, a phase tracking reference signal PT-RS, a positioning reference signal PRS, or a sounding reference signal SRS.

57. A communications device, wherein the communications device is a first device, and the communications device comprises:
a first receiving unit, configured to receive one or more sensing signals, wherein the sensing signal is a reference signal and/or is a signal carried on a data channel.

58. A communications device, wherein the communications device is a second device, and the communications device comprises:
a first sending unit, configured to send one or more sensing signals, wherein the sensing signal is a reference signal and/or is a signal carried on a data channel.

59. A communications device, wherein the communications device is a third device, and the communications device comprises:
a fourth receiving unit, configured to receive result feedback information corresponding to one or more sensing signals, wherein the sensing signal is a reference signal and/or is a signal carried on a data channel.

60. A communications device, comprising a transceiver, a memory, and a processor, wherein the memory is configured to store a program, and the processor is configured to invoke the program in the memory to cause the communications device to execute the method according to any one of claims 1 to 27.

61. A communications device, comprising a transceiver, a memory, and a processor, wherein the memory is configured to store a program, and the processor is configured to invoke the program in the memory to cause the communications device to execute the method according to any one of claims 28 to 36.

62. A communications device, comprising a transceiver, a memory, and a processor, wherein the memory is configured to store a program, and the processor is configured to invoke the program in the memory to cause the communications device to execute the method according to any one of claims 37 to 56.

63. An apparatus, comprising a processor, configured to invoke a program from a memory to cause the apparatus to execute the method according to any one of claims 1 to 27.

64. An apparatus, comprising a processor, configured to invoke a program from a memory to cause the apparatus to execute the method according to any one of claims 28 to 36.

65. An apparatus, comprising a processor, configured to invoke a program from a memory to cause the apparatus to execute the method according to any one of claims 37 to 56.

66. A chip, comprising a processor, configured to invoke a program from a memory to cause a device installed with the chip to execute the method according to any one of claims 1 to 27.

67. A chip, comprising a processor, configured to invoke a program from a memory to cause a device installed with the chip to execute the method according to any one of claims 28 to 36.

68. A chip, comprising a processor, configured to invoke a program from a memory to cause a device installed with the chip to execute the method according to any one of claims 37 to 56.

69. A computer-readable storage medium, wherein the computer-readable storage medium stores a program, and the program causes a computer to execute the method according to any one of claims 1 to 27.

70. A computer-readable storage medium, wherein the computer-readable storage medium stores a program, and the program causes a computer to execute the method according to any one of claims 28 to 36.

71. A computer-readable storage medium, wherein the computer-readable storage medium stores a program, and the program causes a computer to execute the method according to any one of claims 37 to 56.

72. A computer program product, comprising a program, wherein the program causes a computer to execute the method according to any one of claims 1 to 27.

73. A computer program product, comprising a program, wherein the program causes a computer to execute the method according to any one of claims 28 to 36.

74. A computer program product, comprising a program, wherein the program causes a computer to execute the method according to any one of claims 37 to 56.

75. A computer program, wherein the computer program causes a computer to execute the method according to any one of claims 1 to 27.

76. A computer program, wherein the computer program causes a computer to execute the method according to any one of claims 28 to 36.

77. A computer program, wherein the computer program causes a computer to execute the method according to any one of claims 37 to 56.
